# EUROPÄISCHE PATENTSCHRIFT

(11) **EP 0 858 585 B1**
(45) Veröffentlichungstag und Bekanntmachung des Hinweises auf die Patenterteilung: **02.01.2002**
(21) Anmeldenummer: 96937275.4
(22) Anmeldetag: 29.10.1996
(51) Int. Cl.: G01F 3/10

(54) **DURCHFLUSSMESSER**
FLOW METER
DEBITMETRE

(30) Priorität: 30.10.1995 DK 121595
(43) Veröffentlichungstag der Anmeldung: 19.08.1998
(73) Patentinhaber: Marconi Commerce Systems GmbH & Co.KG, 33154 Salzkotten (DE)
(72) Erfinder: TINGLEFF, Michael, DK-9270 Klarup (DK); MILLER, Willi, DK-9690 Fjerritslev (DK); KÖLP, Manfred, D-44805 Bochum (DE); HARDING,Alfons, 33178 Borchen/Alfen (DE)
(74) Vertreter: Fitchett, Stuart Paul
(86) Internationale Anmeldenummer: EP9604689
(87) Internationale Veröffentlichungsnummer: WO9716706

(56) Entgegenhaltungen:
- WO-A-93/12405
- DE-A- 4 042 397
- DE-A- 4 208 869
- FR-A- 2 594 221
- US-A- 4 996 888

## Beschreibung

Die Erfindung betrifft einen Durchflußmesser gemäß Gattungsbegriff des Anspruches 1.

Ein gattungsgemäßer Durchflußmesser ist aus der EP 05 72 621 her bekannt. Der dort offenbarte Durchflußmesser findet Verwendung in Tanksäulen für flüssigen Kraftstoff bspw. Benzin, Diesel oder dergleichen. An die Genauigkeit einer derartigen Meßvorrichtung werden hohe Anforderungen gestellt. Die Vorrichtung muß eichfähig sein. Darüber hinaus soll eine derartige Vorrichtung möglichst preisgünstig herstellbar sein und eine hohe Standzeit besitzen. Die vorbeschriebene Meßvorrichtung besitzt ein Gehäuse, in welchem zwei ineinandergreifende Schraubenspindeln angeordnet sind. Die Schraubenspindeln sind leichtgängig jeweils endseitig gelagert. Die äußeren Flanken der Schraubenspindeln drehen sich mit minimalem Abstand zur Gehäusewand in entsprechenden Gehäusebohrungen. Von der einen Achsrichtung her strömt die zu meßende Flüssigkeit in die Spindelanordnung und versetzt die Spindeln zufolge der Flußgeschwindigkeit in Drehung. Die Flüssigkeit tritt an der gegenüberliegenden Achsseite aus der Spindelanordnung heraus und durchströmt eine Meßkammer, in welcher eine Erregerscheibe rotieren kann, welche mit einer der beiden Spindeln fest verbunden ist. Die im Flüssigkeitsstrom rotierende Erregerscheibe wirkt mit einem gehäuseseitigem Detektor zusammen, welcher die von der Erregerscheibe ausgesandten Drehzahlinformationen aufnimmt und an eine elektronische Auswerteschaltung weiterleitet, zur Aufarbeitung der Meßimpulse in Volumenwerte.

Aus der DE 42 08 869 ist ebenfalls eine Vorrichtung zur Bestimmung der Durchflußmenge in einer Kraftstoffleitung her bekannt. Dort ist endseitig an einer Spindel ein Pohlrad aus Stahl angeordnet, welches mit einem induktiven Nährungsschalter zusammenwirkt. Um den Drehsinn der Spindeln zu ermitteln sind dort zwei Nährungsschalter vorgesehen, welche in versetzter Gegenüberlage in das Gehäuse eingeschraubt sind und in den Flüssigkeitsstrom in der Meßkammer ragen. Nachteilhaft an diesen Nährungsschalter ist die aufwendige Montage, da sie zusammen mit den Anschlußkabeln in entsprechende Gewindeöffnungen der Meßkammer eingeschraubt werden müssen. Diese Nährungsschalter befinden sich unmittelbar im explosionsgeschützten Bereich der Meßanordnung. Die Nährungsschalter beanspruchen darüber hinaus einen großen Querschnitt der durchströmten Meßkammer.

Ein ordnungsgemäßes Funktionieren einer gattungsgemäßen Flüssigkeitsmeßvorrichtung setzt voraus, daß die Spindeln mit minimaler Momentenbelastung drehen können.
Dies setzt voraus, daß die Bremswirkung, welche durch die in der Flüssigkeit drehende Erregerscheibe minimiert werden muß.

Der Erfindung liegt die Aufgabe zugrunde, eine gattungsgemäße Vorrichtung sowohl herstellungstechnisch, als auch in ihrer Funktionsfähigkeit zu verbessern.

Gelöst wird die Aufgabe durch die in den Ansprüchen angegebene Erfindung.

Zufolge der erfindungsgemäßen Ausgestaltung dreht die Erregerscheibe in einem teilweise abgeschirmten Bereich, der die Form eines Spaltes besitzt. Hierdurch wird die Erregerscheibe von dem durchströmenden Medium in minimaler Weise gesbremst. Unterstützt wird diese vorteilhafte Wirkung auch dadurch, daß die Erregerscheibe umfänglich glatt gestaltet ist, so daß ein Schaufelradeffekt, wie er bei den Vorrichtungen gemäß dem Stand der Technik auftreten könnte, hier nicht auftritt. Die Spaltgestaltung läßt es sodann zu, daß die Erregerscheibe von der Breitseite her abgetastet werden kann. Hierzu sind im Spaltwandbereich mindestens zwei Detektoren angeordnet, welche auf Magnetfelder empfindlich sind. In der Scheibe selbst sind Magneten oder magnetische Felder angeordnet, welche in Achsrichtung wirken. Die magnetischen Feldlinien verlaufen daher nahezu quer durch die Spaltwände. Als Magnetfeld-Detektoren werden bevorzugt Hall-Sensoren verwendet. Diese Hall-Sensoren werden vorzugsweise in einer von außen zugänglichen Detektorkammer eingesetzt, welche von der Meßkammer mittels einer Wand aus Aluminium oder dergleichen abgetrennt ist, so daß die Sensoren nicht mehr im explosionsgeschützten Bereich des Durchflußmessers liegen. Durch diese Maßnahme verringern sich die Anforderungen, welche an die Detektoren gestellt werden müssen erheblich. Auch vereinfacht sich die Montage, da nunmehr ein Einschrauben der Sensoren in Gewindebohrungen des Gehäuses entfallen kann. Die Detektorkammer ist vorzugsweise einem auf das Spindelgehäuse aufmontierbaren Gehäuseteil zugeordnet. Dies vereinfacht die Montage, da die Gehäusetrennebene im Bereich des Spaltes liegt. Die Erregerscheibe weist bevorzugt acht gleichmäßig über den Umfang einer Kreislinie auf der Scheibe angeordnete Magnete auf. Diese Magnete können jeweils parallel oder abwechselnd antiparallel ausgerichtet sein. Die dem Spindelgehäuse zugeordnete Spaltwand wird in einer bevorzugten Weiterbildung der Erfindung von einem Teilbereich einer ein Spindellager überfangenden Blende ausgebildet, wobei die Blende eine Öffnung hat, durch welche die Flüssigkeit in Achsrichtung strömen kann.

Das Detektorgehäuse ragt etwa bis zur Achse der Spindel bzw. der Erregerscheibe in die Meßkammer hinein, so daß die Scheibe nahezu mit einer Hälfte im Spalt einliegt. Hierdurch werden die auf die Scheibe zufolge der Flüssigkeitsströmung einwirkenden Kräfte reduziert. Die Scheibe ist darüber hinaus sehr flach gestaltet. Ihre Dicke ist um ein Vielfaches geringer, als ihr Durchmesser, so daß das Trägheitsmoment reduziert ist. Nichtlineare Fehler werden hierdurch reduziert. In die Meßkammer hineinregende Teile werden durch die Erfindung verhindert. Der Querschnitt der Meßkammer ist D-förmig. Die elektrische Anordnung kann, wenn sie in der gesonderten Detektorkammer angeordnet ist in einfacher Weise abgeschirmt werden, einerseits gegen äußere magnetische oder elektrische Einwirkung und andererseits gegen das zu meßende flüssige Medium. Die mindestens zwei in der Detektorkammer angeordneten Hall-Sensoren können exakt positioniert werden, um die genaue Phaseninformation und damit die die Information über die Drehrichtung der Erregerscheibe zu erhalten. Die magnetischen Flächenabschnitte auf der Scheibe, welche in ihrer Breitseite wirken, bestehen aus kleinen, magnetischen, weichen Formationen, die auf einem Kreis um den Drehpunkt der Scheibe positioniert sind. Der Querschnitt der Meßkammer im Bereich der Erregerscheibe ist größer oder gleich dem kleinsten Querschnitt des Flüssigkeitsweges. Hierdurch werden Flüssigkeitsbeschläunigungen im Bereich der Erregerscheibe im tolerierbaren Bereich gehalten.

Nachfolgend wird die Erfindung anhand beigefügter Zeichnung im Detail erläutert. Es zeigen:
- Fig. 1: den Querschnitt einer erfindungsgemäßen Vorrichtung,
- Fig. 2: einen Schnitt gemäß der Linie II-II in Fig. 1,
- Fig. 3: einen Ausschnitt aus der Fig. 1 im Bereich der Meßkammer,
- Fig. 4: ein zweites Ausführungsbeispiel der Erfindung und
- Fig. 5: einen Schnitt durch die Meßkammer beim Ausführungsbeispiel gemäß Fig. 4.

Der erfindungsgemäße Durchflußmesser besitzt eine langgestreckte Form. In einem Gehäuse 1 sind zwei Schraubenspindeln 2, 3 angeordnet, die mit ihren Schraubengängen ineinandergreifen und dadurch abgeschlossene Volumina ausbilden. Die Spindeln sind leichtgängig in Kugellager 18 des Spindelgehäuses gelagert. Die Kugellager 18 sind jeweils an den Enden der Schraubenspindeln 2, 3 angeordnet. Eine der beiden Schraubenspindeln 3 trägt an ihrem stromabwärtigen Ende eine Erregerscheibe 4, welche auf das gelagerte Ende der Spindel aufgeschraubt ist.

Zulaufseitig ist auf das Spindelgehäuse 1 ein Einlaßflansch 15 aufmontiert, welcher eine axiale Einlaßöffnung 8 besitzt, durch welche die Flüssigkeit in die Spindeln eingepumpt wird. Am gegenüberliegenden Stirnende des Spindelgehäuses 1 ist über eine Dichtung 10 ein Detektorgehäuseteil 12 aufmontiert. Dieses Detektorgehäuseteil 12 bildet eine von außen zugängliche Kammer aus, welche über Trennwände gegenüber der Meßkammer 17 abgetrennt ist. An das Sensorgehäuse 12 schließt sich in Achsrichtung der Spindelanordnung ein Auslaßflansch 14 an, welcher gleichgestaltet ist zum Einlaßflansch 15 und welcher eine Auslaßöffnung 9 ausbildet, welche ebenfalls in Achsrichtung ausgerichtet ist.

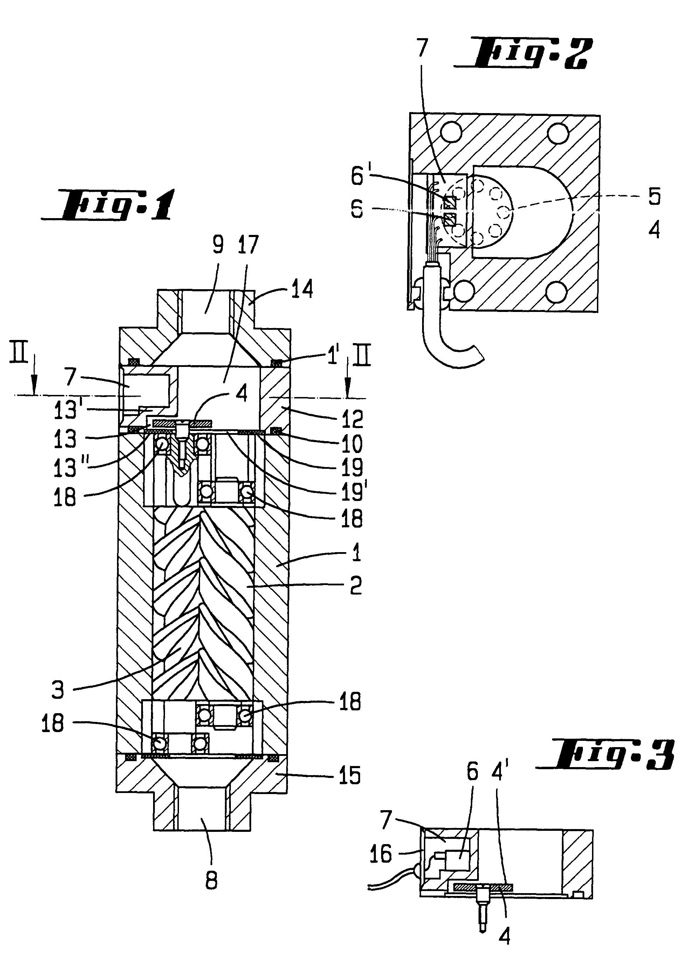

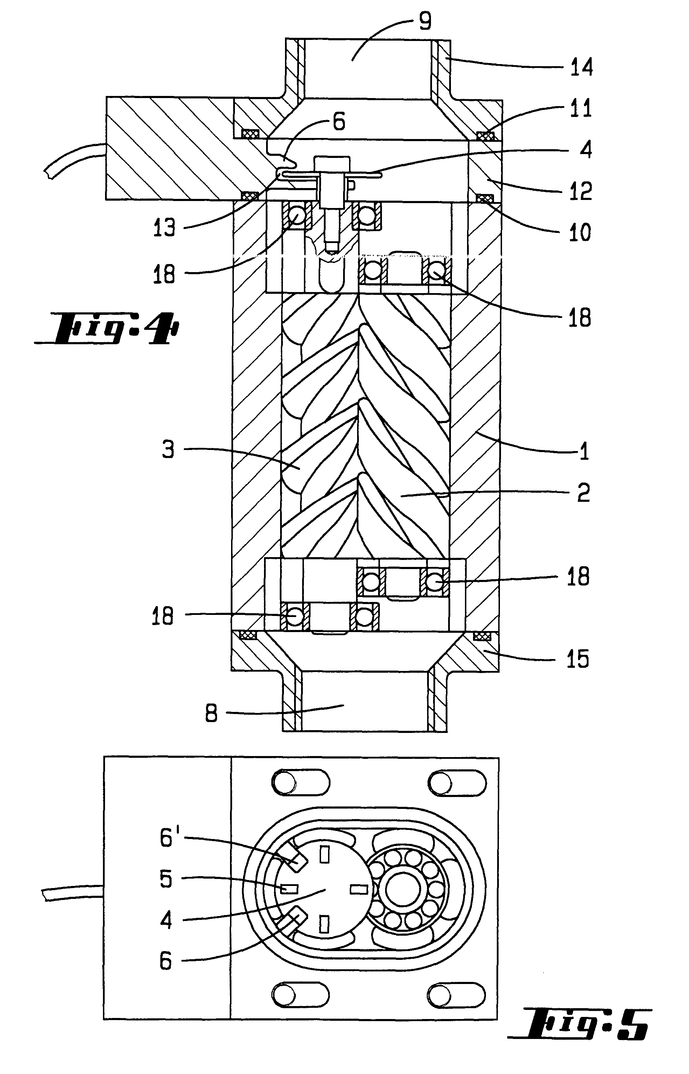

Zwischen den Gehäuseteilen 1 und 12 ist im Bereich der Dichtung 10 eine Blende 19 vorgesehen, welche das Lager 18, welches das eine Ende der Spindel 3 lagert, überfängt. Die Blende 19 besitzt eine zentrale Öffnung 19', durch welche die Flüssigkeit herausströmt. Durch die Öffnung 19' ragt auch eine Schraube, welche den Achszapfen der Scheibe 4 ausbildet, mit welchem die Scheibe 4 drehfest mit der Spindel 3 verbunden ist. Die Blende 19 bildet die Spaltwand 13'' eines Spaltes 13 aus, in welchem die Scheibe 4 etwa zur Halfte dreht. Die gegenüberliegende Spaltwand 13' wird von der Gehäusewand der in das Gehäuse 12 eingezogenen Sensorkammer 7 ausgebildet. Die Kammerwand der Sensorkammer 7 liegt parallel zur Scheibe 4 über deren Breitseite. Wie insbesondere der Fig. 2 zu entnehmen ist, tauchen die Magnete 5, welche in gleichmäßiger Umfangsverteilung auf der Scheibe 4 angeordnet sind, durch den Spalt 13 hindurch und laufen an der Kammerwand 13' entlang.

Innerhalb der Kammer 7 sind -im Ausführungsbeispiel 2-Magnetfeldsensoren 6, 6' nebeneinander angeordnet. Der Abstand der Detektoren 6, 6' ist ungleich dem Abstand der Magnete 5 auf der Scheibe, so daß die Phasenlage der Scheibe und damit die Drehrichtung der Scheibe ermittelbar ist. Die Detektorkammer 7 besitzt eine Kabeldurchführungsöffnung für Anschlußkabel für die Hall-Sensoren 6, 6'. Die Kammer besitzt darüber hinaus einen Deckel 16. Mit diesem kann die Kammer nach der Montage der bspw. auf einer Leiterplatte vormontierten Detektoren 6, 6' in der Kammer geschlossen werden.

Die Scheibe 4 ist in axialer Verlängerung zur Spindel 3 angeordnet und mit einer Anzahl von diskreten Magneten versehen. Die Scheibe 4 wird teilweise, etwa zur Hälfte von der Fläche 13' der Detektorkammer 7 überlappt, so daß die Scheibe teilweise in einem Spalt dreht. Die Scheibe 5 hat eine glatte Oberfläche und ragt ansonsten in eine D-förmige Meßkammer, welche von der Flüssigkeit durchströmt ist. Wird eine Flüssigkeit durch die Schraubenspindeln 2, 3 hindurchgepumpt, so werden die Spindeln 2, 3 in Drehung versetzt. Die hierdurch ebenfalls in Drehung versetzte Scheibe 4 erzeugt im Bereich der Hall-Sensoren 6, 7 ein wechselndes Magnetfeld, welches von den Detektoren detektiert wird. Die Detektoren geben sodann ein definiertes Pulssignal ab, das zur Signalweiterbehandlung über ein Kabel weitergeleitet wird.

Obwohl die Scheibe 4 eine Rotation in der Flüssigkeitsströmung selbst macht, hat es sich gezeigt, daß durch die erfindungsgemäße Anordnung eine die Linearität unzulässig störende Reibungsbeeinflussung vermieden werden kann.

Es ist von besonderem Vorteil, die Hall-Elemente 6, 6' einem gesondert montierbaren Gehäuseteil 12 zuzuordnen.

Bei dem in den Fig. 4 und 5 dargestellten Ausführungsbeispiel bewegt sich die Scheibe 4 in einem Spalt 13, welcher von zwei parallel verlaufenden Fortsätzen des Gehäuseteiles 12 ausgebildet wird. Von zwei dieser Fortsätze 6, 6' werden Träger ausgebildet für Detektoren, welche über die Breitseite der Scheibe 4 ragen, um die dort aufgebrachten Magnete 5 zu detektieren, wenn sie unterhalb der Detektoren 6, 6' hindurchtauchen.

## Patentansprüche

1. Vorrichtung zum Messen von Flüssigkeitsmengen, insbesondere von flüssigem Kraftstoff in Tanksäulen, mit mindestens zwei in Achsrichtung durchströmbaren, ineinandergreifenden Schraubenspindeln (8,9), welche jeweils endseitig in einem Gehäuse leichgängig drehbar gelagert sind, welches Gehäuse eine flüssigkeitsdurchströmbare Meßkammer aufweist, in welcher eine mit einer der Spindeln fest verbundenen Erregerscheibe rotieren kann, um mit einem gehäuseseitigem Detektor zusammenzuwirken, **dadurch gekennzeichnet, daß** die Erregerscheibe (4) eine Vielzahl in Kreisform angeordnete und Achsrichtung der Scheibe (4) wirkende Magnete (5) besitzt und bereichsweise in einem Gehäusespalt (13) eintaucht, mit mindestens zwei im Spaltwandbereich (13') angeordneten, die Scheibe über- oder untergreifenden magnetempfindlichen Detektoren (6, 6').

2. Vorrichtung nach Anspruch 1 oder insbesondere danach, **dadurch gekennzeichnet, daß** die Detektoren (6, 6') Hall-Sensoren sind.

3. Vorrichtung nach einem oder mehreren der vorhergehenden Ansprüche oder insbesondere danach, **dadurch gekennzeichnet, daß** die Detektoren in einer gegenüber der Meßkammer (17) abgetrennten Detektorkammer (7) einliegen, dessen Außenwand eine Spalt bildet.

4. Vorrichtung nach einem oder mehreren der vorhergehenden Ansprüche oder insbesondere danach, **dadurch gekennzeichnet, daß** die Detektorkammer (7) einem auf das Spindelgehäuse (1) aufmontierten Gehäuseteil (12) zugeordnet ist.

5. Vorrichtung nach einem oder mehreren der vorhergehenden Ansprüche, oder insbesondere danach, **dadurch gekennzeichnet, daß** die Scheibe (4) acht gleichmäßig über den Umfang einer Kreislinie auf der Scheibe (4) angeordnete Magnete (5) besitzt.

6. Vorrichtung nach einem oder mehreren der vorhergehenden Ansprüche oder insbesondere danach, **dadurch gekennzeichnet, daß** der Durchmesser der Scheibe (4) etwa dem Durchmesser der Schraubenspindel (3) entspricht.

7. Vorrichtung nach einem oder mehreren der vorhergehenden Ansprüche oder insbesondere danach, **dadurch gekennzeichnet, daß** die der Detektorkammeraußenwand (13') gegenüberliegende Spaltwand (13'') von einer ein Spindellager übergreifenden Blende (19) ausgebildet ist, welche eine Öffnung (19') aufweist.

8. Vorrichtung nach einem oder mehreren der vorhergehenden Ansprüche oder insbesondere danach, **dadurch gekennzeichnet, daß** der von der Drehzahlerfassungsanordnung reduzierte Querschnitt des Flüssigkeitsweges größer oder gleich dem kleinsten Querschnitt des Flüssigkeitsweges ist.

9. Vorrichtung nach einem oder mehreren der vorhergehenden Ansprüche oder insbesondere danach, **dadurch gekennzeichnet, daß** die Kammer (7) mehr als zwei Hall-Detektoren aufweist.

10. Vorrichtung nach einem oder mehreren der vorhergehenden Ansprüche oder insbesondere danach, **dadurch gekennzeichnet, daß** die Erregerscheibe eine Kreiszylinderscheibe mit glatter Oberfläche ist.

## Claims

1. Device for measuring quantities of liquid, particularly of liquid fuel in petrol pumps, having at least two intermeshing screw-threaded spindles (8,9) through which flow can take place in the axial direction and which are each mounted to be free-running in a housing at the ends, which housing has a measuring chamber through which the liquid is able to flow and in which an exciter disc solidly connected to one of the spindles is able to rotate in order to co-operate with a detector on the housing side, **characterised in that** the exciter disc (4) has a plurality of magnets (5) which are arranged in a circular shape and which act in the axial direction of the disc (4) and a region of the disc descends into a slot (13) in the housing, there being at least two magnetically sensitive detectors (6, 6') which are arranged in the wall region (13') of the slot and which extend over or under the disc.

2. Device according to claim 1 or particularly according thereto, **characterised in that** the detectors (6, 6') are Hall-effect sensors.

3. Device according to one or more of the foregoing claims or particularly according thereto, **characterised in that** the detectors are housed in a detector chamber (7) which is divided off from the measuring chamber (17) and whose outer wall forms a slot.

4. Device according to one or more of the foregoing claims or particularly according thereto, **characterised in that** the detector chamber (7) is assigned to a housing component (12) which is mounted on the spindle housing (1).

5. Device according to one or more of the foregoing claims or particularly according thereto, **characterised in that** the disc (4) has eight magnets (5) arranged uniformly on the disc (4) around the circumference of a circle.

6. Device according to one or more of the foregoing claims or particularly according thereto, **characterised in that** the diameter of the disc (4) approximately corresponds to the diameter of the screw-threaded spindles (3).

7. Device according to one or more of the foregoing claims or particularly according thereto, **characterised in that** the slot wall (13'') situated opposite the outer wall of the detector chamber (13') is formed by a blanking piece (19) which fits over a spindle bearing and which has an opening (19').

8. Device according to one or more of the foregoing claims or particularly according thereto, **characterised in that** the cross-section of the path for liquid as reduced by the arrangement for sensing speed of rotation is equal to or greater than the least cross-section on the path for liquid.

9. Device according to one or more of the foregoing claims or particularly according thereto, **characterised in that** the chamber (7) has more than two Hall-effect sensors

10. Device according to one or more of the foregoing claims or particularly according thereto, **characterised in that** the exciter disc is a disc in the form of a circular cylinder having a smooth surface.

## Revendications

1. Appareil pour mesurer des quantités de liquide, en particulier de carburant liquide dans des pompes de distribution, comprenant au moins deux broches hélicoïdales (8, 9) susceptibles d'être traversées par l'écoulement en direction axiale, et en engagement l'une avec l'autre, lesdites broches étant montées chacune aux extrémités dans un boîtier avec faculté de rotation sensiblement libre, ledit boîtier comprenant une chambre de mesure susceptible d'être traversée par le liquide et dans laquelle un disque d'excitation fermement relié à l'une des broches est capable de tourner afin de coopérer avec un détecteur disposé côté boîtier, **caractérisé en ce que** le disque d'excitation (4) possède une pluralité d'aimants (5) agencés sous forme circulaire et agissant dans la direction axiale du disque (4) et plonge localement dans une fente (13) du boîtier, et comprenant au moins deux détecteurs (6, 6') sensibles sur le plan magnétique, agencés dans la région (16') de paroi présentant la fente, et engageant le disque par le dessus ou par le dessous.

2. Appareil selon la revendication 1, **caractérisé en ce que** les détecteurs (6, 6') sont des capteurs de Hall.

3. Appareil selon l'une ou plusieurs des revendications précédentes, **caractérisé en ce que** les détecteurs sont disposés dans une chambre de détection (7), séparée par rapport à la chambre de mesure (17) et dont la paroi extérieure forme une fente.

4. Appareil selon l'une ou plusieurs des revendications précédentes, **caractérisé en ce que** la chambre de détection (7) est associée à une partie de boîtier (12) montée sur le boîtier (1) des broches.

5. Appareil selon l'une ou plusieurs des revendications précédentes, **caractérisé en ce que** le disque (4) possède huit aimants (5) agencés régulièrement sur la périphérie d'une ligne circulaire sur le disque (4).

6. Appareil selon l'une ou plusieurs des revendications précédentes, **caractérisé en ce que** le diamètre du disque (4) correspond approximativement au diamètre des broches hélicoïdales (3).

7. Appareil selon l'une ou plusieurs des revendications précédentes, **caractérisé en ce que** la paroi (13") dotée de la fente et située à l'opposé de la paroi extérieure (13') de la chambre de détection est formée par un diaphragme (19) qui surplombe un palier de broche et qui présente une ouverture (19').

8. Appareil selon l'une ou plusieurs des revendications précédentes, **caractérisé en ce que** la section du trajet de liquide réduite par l'agencement de détection de vitesse de rotation est supérieure ou égale à la plus petite section du trajet de liquide.

9. Appareil selon l'une ou plusieurs des revendications précédentes, **caractérisé en ce que** la chambre (7) présente plus de deux détecteurs de Hall.

10. Appareil selon l'une ou plusieurs des revendications précédentes, **caractérisé en ce que** le disque d'excitation est un disque cylindrique circulaire présentant une surface lisse.
